# EUROPEAN PATENT APPLICATION

(11) **EP 3 199 686 A1**
(43) Date of publication of application: **02.08.2017**
(21) Application number: 14902698.1
(22) Date of filing: 17.11.2014
(51) Int. Cl.: D06F 33/02

(54) **WASHING METHOD AND WASHING MACHINE USING SAID METHOD**

(30) Priority: 28.09.2014 CN 201410509339
(71) Applicant: Qingdao Haier Washing Machine Co., Ltd., Laoshan District Qingdao, Shandong 266101 (CN)
(72) Inventor: LV, Peishi, Qingdao Shandong 266101 (CN); XU, Sheng, Qingdao Shandong 266101 (CN); SONG, Huacheng, Qingdao Shandong 266101 (CN); SHAN, Shiqiang, Qingdao Shandong 266101 (CN)
(74) Representative: Pfenning, Meinig & Partner mbB
(86) International application number: PCT/CN2014/091307
(87) International publication number: WO 2016/045179

(57) **Abstract**

Disclosed are a washing method and a washing machine using the washing method. In the washing method, washings are suspended in a washing space (2) through a suspension component (4), so that the washings can move in a first movement manner in the washing space (2); the washings are washed through a water flow sprayed by nozzles (8) which move in a second movement manner different from the first movement manner; and the water flow are made to cover at least part of washings by changing a relative position between washings and the nozzles (8). A high-pressure water flow flowing out from the nozzles (8) changes flushed positions along with change of the relative position between washings and the nozzles (8), so that washings can be thoroughly washed and there is a good washing effect; and moreover, the washing method replaces drum turning of a drum washing machine and impeller stir of an impeller washing machine through flushing with high-pressure water, so as to reduce abrasion to washings and quantity of washing water.

## Description

This application claims priority to a Chinese patent application No. 201410509339.4, filed with the Chinese Patent Office on Sep. 28, 2014, titled "washing method and washing machine using said method" by Qingdao Haier washing machine Co., Ltd., disclosures of which are incorporated herein by reference in their entireties.

### TECHNICAL FIELD

The present invention relates to the field of washing, and in particular to a washing method and a washing machine using said method.

### BACKGROUND

An existing washing machine, especially an impeller washing machine, stirs a water flow and clothes for washing by means of a stirring blade during use. When this manner is used for washing the clothes, the damage to the clothes is serious. Meanwhile, to ensure that the clothes can be soaked at a water level, a space between a lower part of an inner drum and an outer drum shall be filled with water, which results in a need for a large number of water when a single piece of clothes with a small capacity is washed, causing a waste of water resources.

An application document with a publication No. CN103628276A discloses a circulating high-pressure washing helper for a drum washing machine, including a motor, a high-pressure water pump, a water outlet pipe, water spray heads and a water inlet pipe; the motor is connected with the high-pressure water pump; one end of the water outlet pipe and the water inlet pipe is connected with the high-pressure water pump; the other end of the water outlet pipe is connected with the water spray heads; and a power line is arranged on the motor. The motor and the high-pressure water pump are fixed on a base. A timing controller is arranged on the power line. The solution has the features of convenient installation, economy and practicability, and can also achieve the features of electricity saving, water saving, cleaning solution saving and time saving. However, since washings and the water spray heads make no relative movement in the solution, areas of washings washed by a high-pressure water flow are only points corresponding to the water spray heads and parts not washed by the high-pressure water flow will not be well cleaned, causing a poor washing effect.

Based on the above description, a new washing machine using a high-pressure washing method is urgently needed to solve the problems in an existing art that washings cannot be fully well cleaned and the washing effect is poor.

### SUMMARY

In view of this, the purpose of the present invention is to provide a washing machine. The washing machine replaces drum turning of a drum washing machine and impeller stir of an impeller washing machine through flushing with high-pressure water, so as to reduce abrasion to washings and quantity of washing water and ensure thorough washing of washings and good washing effect.

Moreover, a high-pressure water flow that flows from nozzles can change a flushed position along with the vertical movement of the nozzles, so that the washing effect of washings is better.

Another purpose of the present invention is to provide a washing method. The washing method is applied to the above washing machine. Washings can move in a first movement manner along with a suspension component, and simultaneously are washed by the water flow which is sprayed by nozzles that move in a second movement manner different from the first movement manner; the flushed position is changed by changing a relative position of washings and the nozzles, so as to ensure thorough washing of washings and good washing effect.

The following technical solution is adopted in embodiments of the present invention.

A washing machine includes a washing space which internally includes a suspension component capable of moving in a first movement manner and being used for suspending washings, and further includes at least one group of nozzles connected with a water pump which sprays a water flow through the nozzles after pressurizing the water flow to wash the washings suspended on the suspension component; and the water flow can cover at least one side of area of the washings by changing a relative position between the washings and the nozzles.

Preferably, the washing machine further includes a nozzle driving apparatus configured to drive the nozzles to move in a second movement manner in the washing space, where the second movement manner is different from the first movement manner.

Preferably, the nozzles are arranged at an upper end of a main spray pipe; and the nozzle driving apparatus specifically includes: at least one gear rack is arranged at a side wall of a housing of the washing machine; the gear rack is driven by a driving gear; the main spray pipe is fixedly installed on the gear rack; the driving gear is driven by a motor; and the driving gear can drive the gear rack to move up and down so as to drive the main spray pipe to move.

Preferably, the suspension component includes a clothes suspending rod and an eccentric apparatus arranged on the clothes suspending rod; the eccentric apparatus includes a base and a rotating component; a sliding groove vertical to the clothes suspending rod is arranged in a middle part of the base; one end of the rotating component is connected with the motor, and the other end penetrates through the sliding groove for connection with the clothes suspending rod; and the motor can drive the rotating component to rotate so as to drive the clothes suspending rod to move horizontally.

Preferably, the water pump is connected with the main spray pipe through a flexible or telescopic water supply pipe.

Preferably, a water inlet of the water supply pipe is positioned in water on a bottom of the washing space, and a filtering apparatus is installed on the water supply pipe between the water inlet and the nozzles.

A washing method, in which washings are suspended in a washing space through a suspension component, includes: enabling the washings to move in a first movement manner in the washing space, simultaneously washing the washings by a water flow which is sprayed by nozzles that move in a second movement manner different from the first movement manner; and enabling the water flow to cover at least part of the washings by changing a relative position between washings and the nozzles.

Preferably, washings make linear or curvilinear reciprocating movement along a first direction.

Preferably, the nozzles make linear or curvilinear movement along a second direction.

The technical solution proposed by embodiments of the present invention has the beneficial effects as follows:
(1) In the washing method provided in the present invention, washings are suspended in the washing space through the suspension component; the suspension component can move in the first movement manner; a group of nozzles is installed in the washing space; washings are washed through a high-pressure water flow sprayed by the nozzles; the high-pressure water flow can cover at least one side of area of washings; meanwhile, washings can move in the first movement manner along with the suspension component; the high-pressure water flow which flows from the nozzles can change the flushed position along with the movement of washings in the first movement manner; therefore, washings can be thoroughly washed and bring a good washing effect; and moreover, the washing method replaces drum turning of a drum washing machine and impeller stir of an impeller washing machine through flushing with high-pressure water, so as to reduce abrasion to washings and quantity of washing water;
(2) Driven by the nozzle driving apparatus, the nozzles can move in the second movement manner in the washing space; the second movement manner is different from the first movement manner; the high-pressure water flow which flows from the nozzles can change the flushed position along with the movement of the nozzles; therefore, the washing effect of washings is better.

### BRIEF DESCRIPTION OF DRAWINGS

In order that the technical solution in embodiments of the present invention is more clearly described, a drawing required to be used in the description of embodiments of the present invention is simply introduced below. It is apparent that the drawing in the following description only belongs to some embodiments of the present invention, and those ordinary skilled in the art may also obtain other drawings according to the contents and the drawing of embodiments of the present invention on the premise of not doing creative work.
Fig. 1 is a schematic structural diagram illustrating a washing machine in which a main spray pipe moves down in the present invention; and
Fig. 2 is a schematic structural diagram illustrating a washing machine in which a main spray pipe moves up in the present invention.

A list of reference numerals:
1. Housing; 2. Washing space; 3. Supporting component; 4. Suspension component; 5. Gear rack; 6. Driving gear; 7. Main spray pipe; 8. Nozzle; 9. Water supply pipe;
41. Eccentric apparatus; 42. Clothes suspending rod;
411. Base; 412. Sliding groove; and 413. Rotating component.

### DETAILED DESCRIPTION

In order that the technical problem solved by the present invention, the adopted technical solution and the achieved technical effects are clearer, the technical solution of embodiments of the present invention is further described in detail below in combination with a drawing. Apparently, embodiments described are only part of embodiments of the present invention, rather than all embodiments. Based on embodiments in the present invention, all other embodiments obtained by those skilled in the art on the premise of not doing creative work shall belong to the protection scope of the present invention.

### Apparatus embodiment

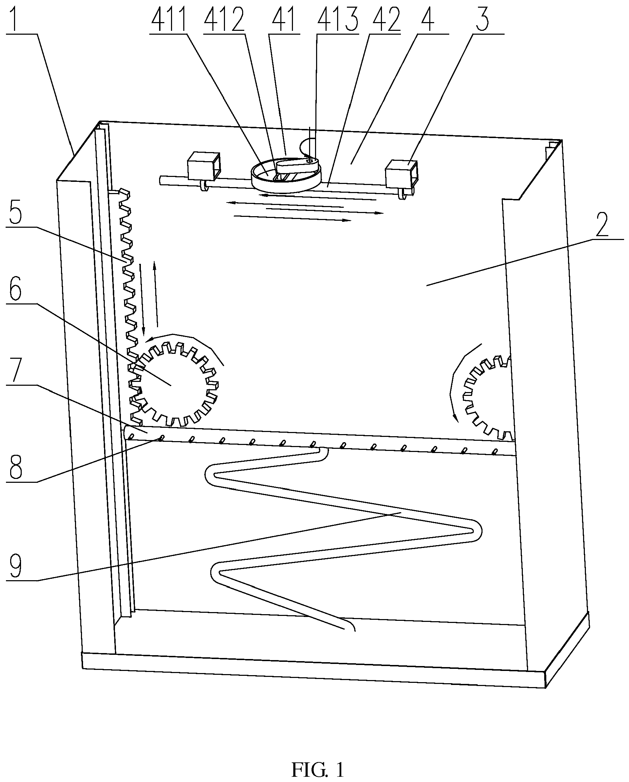

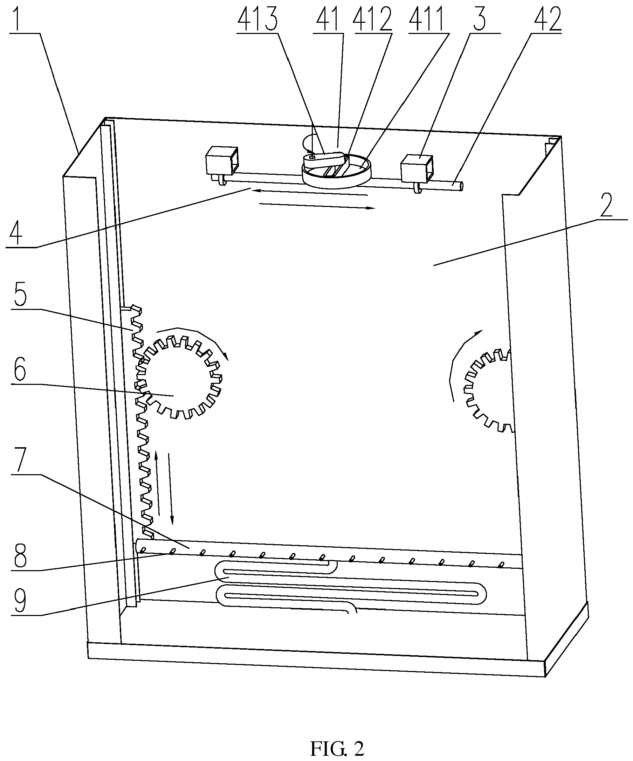

As shown in Fig. 1 and Fig. 2, the present application provides a washing machine, including a closed washing space 2. A suspension component 4 capable of moving in a first movement manner and at least one group of nozzles 8 are arranged in the closed washing space 2. The suspension component 4 is used for suspending washings, and the nozzles 8 are connected with a water pump. The water pump is preferably a high-pressure water pump, and sprays a high-pressure water flow through the nozzles 8 after pressurizing the water flow to wash washings suspended on the suspension component 4. The high-pressure water flow can cover at least one side of area of washings by changing a relative position between washings and the nozzles. Specifically, washings can move in the first movement manner along with the suspension component 4; the high-pressure water flow which flows from the nozzles 8 can change the flushed position along with the movement of washings in the first movement manner, so that washings can be thoroughly washed and bring a good washing effect; and moreover, the washing method replaces drum turning of a drum washing machine and impeller stir of an impeller washing machine through flushing with high-pressure water, so as to reduce abrasion to washings and quantity of washing water.

In the present embodiment, the first movement manner may be horizontal linear movement and curvilinear movement, or may be rotating movement, helical movement, constant-speed movement or variable-speed movement.

Specifically, the washing machine provided in the present application has a door body and a housing 1; the door body and the housing 1 form the closed washing space 2; the washing space 2 can accommodate washings and other apparatuses; and a washing process is finished in the washing space 2. In the present embodiment, the washing space 2 formed by the door body and the housing 1 is sealed, so as to ensure that the high-pressure water flow will not overflow from the washing space 2 during washing.

The nozzles 8 are arranged at an upper end of a main spray pipe 7, and a plurality of nozzles 8 with a small aperture are uniformly arranged on the main spray pipe 7. The high-pressure water pump is connected with the main spray pipe 7 through a water supply pipe 9. Washing water enters the washing space 2 by means of the control of a water valve. The high-pressure water pump absorbs the washing water on the bottom of the washing space 2; after pressurized, the washing water is supplied to the water supply pipe 9 to reach the main spray pipe 7; and the high-pressure water flow is sprayed through the nozzles 8 on the main spray pipe 7. Since the high-pressure water flow is sprayed at the nozzles 8 at high speed and has a strong impact on spots attached to washings, the spots, sprayed by the water flow, on the surfaces of washings leave the surfaces of washings along with the water flow. However, if washings and the nozzles 8 make no relative movement, areas of washings washed by the high-pressure water flow are only points corresponding to the nozzles. In the present invention, the suspension component 4 is designed as a horizontal moving component. During washing, washings are driven to horizontally move through the horizontal movement of the suspension component 44. The high-pressure water flow that flows from the nozzles 8 can change the flushed position along with the horizontal movement of washings, so that washings can be thoroughly washed and bring a good washing effect.

Preferably, two supporting components 3 with a certain distance are arranged at an upper end of the housing 1. One end of the supporting components 3 is fixed on the housing 1, and the other end is a circular ring. The suspension component 4 includes a clothes suspending rod 42 and an eccentric apparatus 41 arranged on the clothes suspending rod 42. Both ends of the clothes suspending rod 42 respectively penetrate through the circular ring of the supporting components 3, and can move relative to the circular ring. The eccentric apparatus 41 includes a base 411 and a rotating component 413. The base 411 is preferably formed by a circular bottom plate and a circle of surrounding plates arranged on an edge of the bottom plate. A sliding groove 412 vertical to the clothes suspending rod 42 is arranged in a middle part of the base 411. One end of the rotating component 413 is connected with an output shaft of the motor, and the other end is a connecting shaft which penetrates through the sliding groove 412 for fixed connection with the clothes suspending rod 42. The motor can drive the rotating component 413 to rotate. At this moment, the connecting shaft of the rotating component 413 can slide back and forth along the sliding groove 412, so as to drive the clothes suspending rod 42 to move horizontally.

Washings suspended on the clothes suspending rod 42 make horizontal linear movement by driving the eccentric apparatus 41 through the motor, and the high-pressure water flow that flows from the nozzles 8 can change the flushed position along with the horizontal linear movement of washings, so that washings can be thoroughly washed and bring a good washing effect.

In the present embodiment, preferably, the washing machine further includes a nozzle driving apparatus configured to drive the nozzles 8 to move in the second movement manner in the washing space 2, and the second movement manner is different from the first movement manner.

In the present embodiment, the second movement manner may be vertical linear movement and curvilinear movement, or may be rotating movement, helical movement, constant-speed movement or variable-speed movement and the like.

In the present embodiment, preferably, the nozzle driving apparatus drives the nozzles 8 to make vertical movement in the washing space 2. The nozzle driving apparatus has a structure as follows: at least one horizontally symmetrical gear rack 5 is movably arranged on a left and a right side walls of the housing 1 of the washing machine. Each gear rack 5 is matched with one driving gear 6 and is driven by the driving gear 6. Meanwhile, two horizontal ends of the main spray pipe 7 are respectively fixedly installed on the gear racks 5 of two horizontal sides. The driving gear 6 is connected with another motor, and is driven by the motor to make rotating movement, so as to drive the gear racks 5 to move up and down along an inner wall of the housing 1 so that the nozzles 8 and the main spray pipe 7 can also make vertical movement. Specifically, when the motor drives the driving gear 6 to make anticlockwise movement, the driving gear 6 drives the gear racks 5 to move down along the inner wall of the housing 1, so as to drive the nozzles 8 and the main spray pipe 7 to make vertical downward movement, as shown in Fig. 1; and when the motor drives the driving gear 6 to make clockwise movement, the driving gear 6 drives the gear racks 5 to move up along the inner wall of the housing 1, so as to drive the nozzles 8 and the main spray pipe 7 to make vertical upward movement, as shown in Fig. 2. Preferably, the water supply pipe 9 is flexible or telescopic. The flexible or telescopic water supply pipe 9 can be extended and retracted along with the upward and downward movement of the main spray pipe 7.

In the present embodiment, through the relative crossed movement of washings and the nozzles 8, the high-pressure water flow that flows from the nozzles 8 can further change the flushed position of washings along with the vertical movement of the nozzles 8, so as to achieve that the whole surface area of washings can be flushed by the high-pressure water flow, so that the washing effect of washings is better.

In the present embodiment, a water inlet of the water supply pipe 9 is positioned in the water on the bottom of the washing space 2. Since the water absorbed by the high-pressure water pump is the water accumulated on the bottom of the washing space 2, the water is recycled. As a preferred solution, a filtering apparatus is installed on the water supply pipe 9 between the water inlet and the nozzles 8, so that the water is purified before re-sprayed, so as to play a better washing effect.

### Method embodiment

The present application further provides a washing method. The washing method is applied to the above washing machine. Washings are suspended in the washing space through the suspension component. The washing space is preferably a closed washing space. During washing, washings move in the first movement manner in the washing space, simultaneously washings are washed by the water flow which is sprayed by the nozzles that move in the second movement manner different from the first movement manner, and the water flow covers at least part of washings by changing the relative position between washings and the nozzles.

As a preferred solution, the first movement manner is that the suspension component drives washings to make linear or curvilinear reciprocating movement along a first direction.

Further preferably, the first direction is a horizontal direction. Specifically, the motor drives the rotating component to make clockwise or anticlockwise rotation on the base, and a connecting column of the rotating component slides back and forth in the sliding groove, so as to drive the clothes suspending rod to make horizontal linear movement.

A group of nozzles is installed in the washing space. Preferably, the nozzles are arranged on the main spray pipe. The main spray pipe is communicated with the washing water on the bottom of the washing space through the water supply pipe, and a water pump is connected to the water supply pipe between the washing water on the bottom of the washing space and the nozzles. The water pump is preferably a high-pressure water pump. During washing, the high-pressure water pump absorbs the washing water on the bottom of the washing space; after pressurized, the washing water reaches the main spray pipe through the water supply pipe; and the high-pressure water flow is sprayed through the nozzles. Washings are washed through the high-pressure water flow sprayed by the nozzles, and the high-pressure water flow can cover at least one side of area of washings.

Since washings can make horizontal linear movement along with the suspension component and the high-pressure water flow which flows from the nozzles can change the flushed position along with the horizontal linear movement of washings, washings can be thoroughly washed and bring a good washing effect; and moreover, the washing method replaces drum turning of a drum washing machine and impeller stir of an impeller washing machine through flushing with the high-pressure water, so as to reduce abrasion to washings and quantity of washing water.

In the present embodiment, preferably, the second movement manner is that the nozzles make linear or curvilinear movement along a second direction.

Further preferably, the second direction is a vertical direction, and the nozzles, driven by the nozzle driving apparatus, make vertical linear or curvilinear movement.

Through the relative crossed movement of washings and the nozzles, the high-pressure water flow that flows from the nozzles can change the flushed position along with the vertical movement of the nozzles, so as to achieve that the whole surface area of washings can be flushed by the high-pressure water flow, so that the washing effect of washings is better.

In the present embodiment, as a preferred solution, the process that the nozzles, driven by the nozzle driving apparatus, make vertical linear movement is realized through the following manner: the motor drives the gears on two horizontal sides to rotate; the gears on both sides respectively drive the gear racks engaged with the gears to move up and down; the gear racks on both sides move up and down and then drive the main spray pipe and the nozzles arranged on the main spray pipe to make vertical linear movement.

Of course, the first direction and the second direction are not limited to the above, and may also be other directions. Moreover, the first movement manner is not limited to the above, and may be rotating movement, helical movement, constant-speed movement or variable-speed movement; and the second movement manner is also not limited to the above, and may be rotating movement, helical movement, constant-speed movement or variable-speed movement and the like.

It should be noted that, the above contents are only better embodiments and technical principles applied by the present invention. Those skilled in the art should understand that the present invention is not limited to specific embodiments described herein, and those skilled in the art can make various obvious changes, readjustments and replacements without departing from the protection scope of the present invention. Therefore, although the present invention is described in detail through above embodiments, the present invention is not limited to above embodiments. The present invention may include more other equivalent embodiments without departing from the concept of the present invention, and the scope of the present invention is determined by the scope of the claims attached.

## Claims

1. A washing machine, comprising a washing space which internally comprises a suspension component capable of moving in a first movement manner and being used for suspending washings, and further comprising at least one group of nozzles connected with a water pump which sprays a water flow through the nozzles after pressurizing the water flow to wash the washings suspended on the suspension component; and the water flow can cover at least one side of area of the washings by changing a relative position between the washings and the nozzles.

2. The washing machine of claim 1, further comprising a nozzle driving apparatus configured to drive the nozzles to move in a second movement manner in the washing space, wherein the second movement manner is different from the first movement manner.

3. The washing machine of claim 2, wherein the nozzles are arranged at an upper end of a main spray pipe; and the nozzle driving apparatus specifically comprises: at least one gear rack is arranged at a side wall of a housing of the washing machine; the gear rack is driven by a driving gear; the main spray pipe is fixedly installed on the gear rack; the driving gear is driven by a motor; and the driving gear can drive the gear rack to move up and down so as to drive the main spray pipe to move.

4. The washing machine of claim 1, wherein the suspension component comprises a clothes suspending rod and an eccentric apparatus arranged on the clothes suspending rod; the eccentric apparatus comprises a base and a rotating component; a sliding groove vertical to the clothes suspending rod is arranged in a middle part of the base; one end of the rotating component is connected with the motor, and the other end penetrates through the sliding groove for connection with the clothes suspending rod; and the motor can drive the rotating component to rotate so as to drive the clothes suspending rod to move horizontally.

5. The washing machine of claim 1, wherein the water pump is connected with the main spray pipe through a flexible or telescopic water supply pipe.

6. The washing machine of claim 5, wherein a water inlet of the water supply pipe is positioned in water on a bottom of the washing space, and a filtering apparatus is installed on the water supply pipe between the water inlet and the nozzles.

7. A washing method, in which washings are suspended in a washing space through a suspension component, comprising: enabling the washings to move in a first movement manner in the washing space, simultaneously washing the washings by a water flow which is sprayed by nozzles that move in a second movement manner different from the first movement manner; and enabling the water flow to cover at least part of the washings by changing a relative position between the washings and the nozzles.

8. The washing method of claim 7, wherein the washings make linear or curvilinear reciprocating movement along a first direction.

9. The washing method of claim 8, wherein the nozzles make linear or curvilinear movement along a second direction.
